# EUROPEAN PATENT SPECIFICATION

(11) **EP 4 327 758 B1**
(45) Date of publication and mention of the grant of the patent: **25.06.2025**
(21) Application number: 23165329.6
(22) Date of filing: 30.03.2023
(51) Int. Cl.: A61B 17/20, A61C 5/42

(54) **ROOT CANAL FILE**
WURZELKANALFEILE
LIME CANALAIRE RADICULAIRE

(30) Priority: 22.08.2022 CN 202211008209
(43) Date of publication of application: 28.02.2024
(73) Proprietor: United Dental Changzhou, Changzhou Jiangsu 213145 (CN)
(72) Inventor: YU, Jianping, Changzhou, Jiangsu, 213145 (CN); LI, Xinyuan, Changzhou, Jiangsu, 213145 (CN)
(74) Representative: Wang, Bo

(56) References cited:
- US-A1- 2007 082 318

## Description

### Technical Field

The present invention belongs to the technical field of root canal files, and in particular relates to a root canal file.

### Background Art

For ordinary single-taper root canal files, during surgical treatment, the closer an instrument is to a root tip, the greater the resistance to dentin removal will be. The ordinary root canal files may have the problem of blockage caused by dentin debris pushed to the root tip and the root canal in a surgical cutting procedure, and the complications such as step, deviation, and perforation during root canal preparation due to the poor guiding of the sharp tip. US 2007/082318 A1 relates to an instrument for drilling root canals, particularly a flexible drilling instrument to be driven mechanically by an electric motor.

### Summary of the Invention

The invention is set out in the appended set of claims.

### Brief Description of the Drawings

Various other advantages and benefits will become apparent to those of ordinary skill in the art upon reading the following detailed description of preferred embodiments. The accompanying drawings are only for the purpose of illustrating the preferred embodiments and are not to be considered as limiting the present invention. Furthermore, throughout the accompanying drawings, the same reference numerals are used to denote the same components. In drawings:
FIG. 1 is a front view of a root canal file according to an embodiment of the present invention;
FIG. 2 is an enlarged schematic structural diagram of at C shown in FIG. 1;
FIG. 3 is a bottom view of the root canal file shown in FIG. 1;
FIG. 4 is a schematic cross-sectional view at A-A shown in FIG. 1; and
FIG. 5 is a schematic cross-sectional view at B-B shown in FIG. 1.

List of numerals:
1. working part; 11. tip portion; 12. threaded portion; 13. non-threaded portion; 121. uncut section; 122. cut section; 131. transition portion; 132. limiting portion; 14. cutting edge; 1211. first line; 1212. second line; 1221. third line; 1222. fourth line; 1223. fifth line; and
2. handle.

### Detailed Description of the Invention

Exemplary implementations of the present invention will be described in more detail below with reference to the accompanying drawings. Although the exemplary implementations of the present invention are shown in the accompanying drawings, it should be understood that the present invention may be embodied in various forms and should not be limited by the implementations set forth herein. On the contrary, these implementations are provided for more thorough understanding of the present invention and to fully convey the scope of the present invention to those skilled in the art.

It should be understood that the terms used herein are only for the purpose of describing the specific exemplary implementations, and are not intended to be as a limitation. As used herein, the singular forms "a", "an" and "the" may also be meant to include the plural forms unless the context clearly indicates otherwise. The terms "comprising", "including", "containing" and "having" are inclusive and thus indicate the presence of the stated features, steps, operations, elements and/or components, but do not exclude the presence or addition of one or more of other features, steps, operations, elements and components, and/or a combination thereof.

Although the terms first, second, third, and the like may be used herein to describe multiple elements, components, regions, layers and/or sections, these elements, components, regions, layers and/or sections should not be limited by the terms. These terms may be only used to distinguish one element, component, region, layer or section from another region, layer or section. Terms such as "first" and "second" and other numerical terms when used herein do not imply a sequence or order, unless the context clearly indicates. Therefore, a first element, component, region, layer or section discussed below could be referred to a second element, component, region, layer or section without departing from the teaching of the exemplary implementations.

For ease of description, spatial relative terms, such as "interior, "exterior", "inner side", "outer side", "below", "under", "over", and "above", may be used herein to describe a relationship of one element or feature as shown in the figure with respect to another element or feature. Such spatially relative terms are intended to encompass different orientations of a device when in use or operation in addition to the orientation depicted in the figures. For example, if the device in the figure is inverted, elements described as "below other elements or features" or "under other components or features" will then be oriented as "over other elements or features" or "above other elements or features". Therefore, the example term "under..." can encompass both orientations of above and below. The device may be otherwise oriented (rotated by 90 degrees or at other orientations), and the spatially relative descriptors used herein are interpreted accordingly.

The following provides many different implementations or examples for implementing different structures of the present invention. In order to simplify the present invention, components and arrangements of specific examples are described below. Of course, they are only examples and are not intended to limit the present invention. Furthermore, the present invention may repeat reference numerals and/or reference letters in the different examples, such repetition is for simplicity and clarity and does not in itself indicate a relationship between the various implementations and/or arrangements discussed. In addition, examples of various specific processes and materials are provided herein, but those of ordinary skill in the art may recognize the application of other processes and/or the use of other materials.

The preferred embodiments of the present invention will be described below in conjunction with the accompanying drawings. It should be understood that the preferred embodiments described here are only used to illustrate and explain the present invention, and are not intended to limit the present invention.

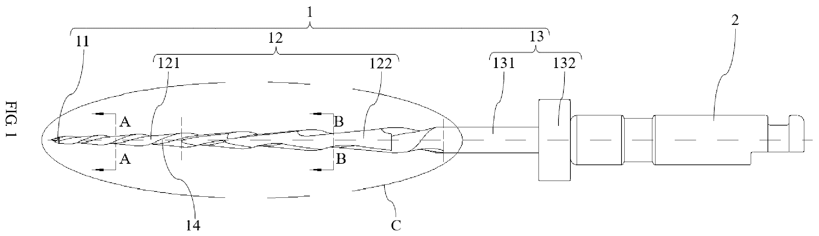

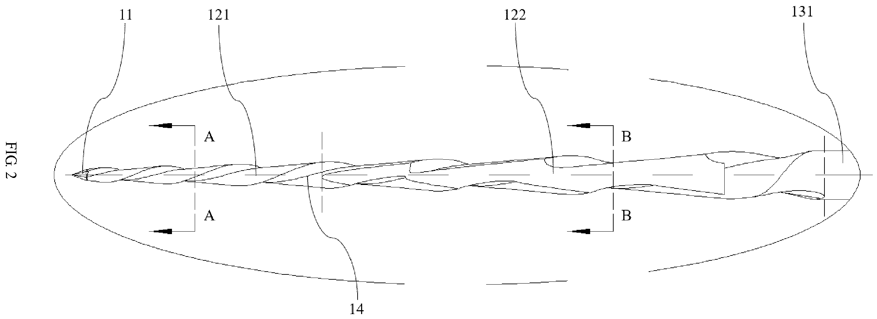

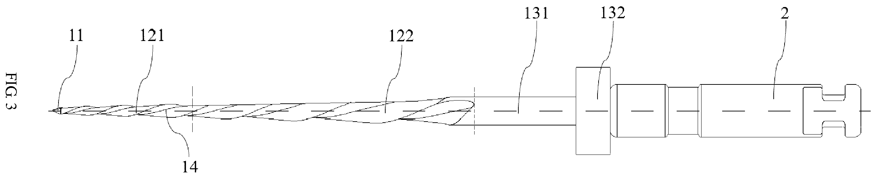

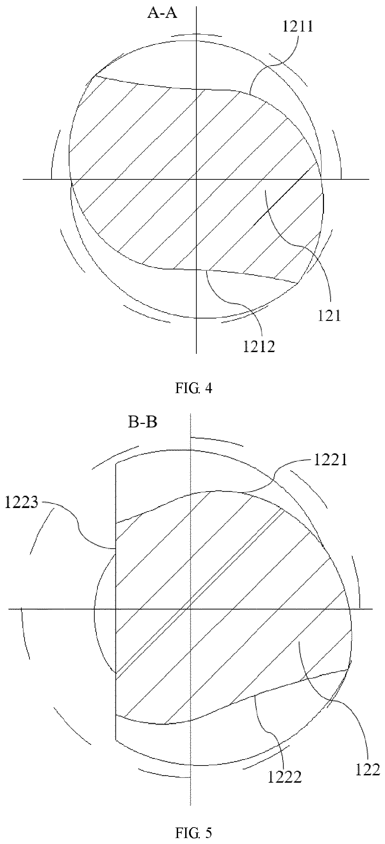

As shown in FIG. 1 to FIG. 5, the present invention provides a root canal file, including:
a working part 1, which includes a tip portion 11, a threaded portion 12 and a non-threaded portion 13, where the tip portion 11 is a round blunt semi-guiding tip, the threaded portion 12 includes an uncut section 121 and a cut section 122, and the tip portion 11, the uncut section 121, the cut section 122 and the non-threaded portion 13 are connected in sequence; and
a handle, to which the non-threaded portion 13 is connected.

The taper, cross-sectional shape, movement mode, size of cutting edges 14, and the like of the root canal file have effect on its cutting and forming ability. During a dental root canal surgery, the infection control at a root tip site is the key to successful root canal therapy. Therefore, how to remove bacterial biofilms from the root tip site to the utmost extent becomes particularly critical.

According to the root canal file of the present application, the tip portion 11 is the round blunt semi-guiding tip, which makes the root canal file have a certain cutting ability during use, while ensuring the original form of a root canal, thus avoiding the complications such as step, deviation, and perforation during root canal preparation. The working part 1 further includes the threaded portion 12, and the threaded portion 12 includes the uncut section 121 and the cut section 122. Due to the cut face design, a debris space of the root canal file is enlarged, and the problem of blockage caused by pushing dentin debris to a root tip and the root canal is avoided. Furthermore, the downward suction force in the root canal is reduced, so that the risk of breakage of the root canal file or the separation of instruments is effectively reduced. Due to the combination of uncut section 121 and cut section 122, the root canal file is ensured to guide debris more smoothly while having a certain cutting force and toughness.

In some embodiments of the present invention, the cross section of the cut section 122 is different from that of the uncut section 121 because the cut section 122 is provided with a cut face. Still further, the cross section of the cut section 122 and the cross section of the uncut section 121 are both blade-shaped and have at least 2 cutting edges 14. The number of cutting edges may be 2, 3 or more. In an embodiment, with 2 cutting edges 14, the "blade-shaped" cross-sectional design can form acute cutting, thus making cutting resistance smaller and cutting efficiency higher, enlarging the debris space, enhancing the debris removal ability, and allowing debris guide to be more smooth. The cutting edges can advance into the root canal and cut the dentin efficiently when in the cutting direction, and can bring the debris in the root canal out while rotating back.

The cross section of the uncut section 121 is a figure that is symmetric about the origin, and the cross section of the cut section 122 is an asymmetrical figure. The cross sections of the uncut section 121 and the cut section 122 are described below with 2 cutting edges 14 as an example. Specifically, the cross-sectional profile of the uncut section 121 includes a first line 1211 and a second line 1212, and the first line 1211 and the second line 1212 are symmetric about the origin. The first line 1211 and the second line 1212 are connected to each other end to end to form a blade-shaped closed figure. The part enclosed by the first line 1211 and the second line 1212 is the cutting edge 14 of the uncut section 121. The cross-section profile of the cut section 122 includes a third line 1221, a fourth line 1222 and a fifth line 1223. The third line 1221, the fourth line 1222 and the fifth line 1223 are connected to each other end to end to form a blade-shaped closed figure. The third line 1221 is inconsistent with the fourth line 1222. The part enclosed by the third line 1221, the fourth line 1222 and the fifth line 1223 is the cutting edge 14 of the cut section 122. With 2 cutting edges 14, the "blade-shaped" cross-sectional design can form acute cutting, thus making cutting resistance smaller and cutting efficiency higher, enlarging the debris space, enhancing the debris removal ability, and allowing debris guide to be smoother. The cutting edges can advance into the root canal and cut the dentin efficiently when in the cutting direction, and can bring the debris in the root canal out while rotating back. With the new "blade-shaped" cross section design, the cutting ability and forming ability of the present invention can be directly enhanced, the debris removal ability can be improved, and the debris guide is smoother. The number of lines included in the cross sections of the cut section 122 and the uncut section 121 will vary with the number of the cutting edges 14. For example, when there are 4 cutting edges 14, the number of lines in the cross section of the uncut section 121 may be 4 or other, and the number of lines in the cut section 122 may be 4 or other.

In some embodiments of the present invention, the taper of the working part 1 gradually increases from the tip portion 11 to the threaded portion 12. The taper of the working part 1 is diversified and variable, the taper gradually increases, and the taper range is 1-30°, which makes the overall flexibility better, and allows the working part to penetrate into the root of the tooth and to adapt to the sizes of the roots of most human teeth. If the taper is set beyond this range, the size of the root canal file will become larger, the tip portion cannot penetrate deep into the root tip for scraping off the bacterial biofilm, and blockage will be caused since the dentin debris is pushed into the root tip. The cutting edges have constantly changed screw pitches and screw angles, the range of the screw pitches is 0.2-3 mm, and the range of screw angles is 5-80°. This design improves the cutting ability and forming ability of the root canal file, which allows the bacterial biofilms to be effectively scraped off during root canal preparation, thus being conducive to the discharge of the dentin debris from a root canal mouth, and improving the debris removal ability. If the screw pitches are set above or below the range value, it will lead to increased processing difficulty and reduced cutting ability. In addition, the instrument can preserve the anatomical shape of the root tip zone better, which helps to preserve more tooth tissue, and is also beneficial to the implementation of more rigorous three-dimensional root canal filling.

In some embodiments of the present invention, the length of the uncut section 121 is less than or equal to 6 mm. It can be known from clinical data and theoretical research that the fatigue fracture of the root canal file basically occurs within 6 mm from the tip portion 11. The taper of the root canal file of the present application gradually increases from the tip portion 11. In other words, the closer the file is to tip portion 11, the smaller the diameter will be, so that the diameter and cross-section symmetry of the tip portion 11 can be kept to the utmost extent, and the fatigue fracture resistance of the instrument is improved. The root canal file of the present application maintains the original blade-shaped cross section in an area of the uncut section 121 within 6 mm from the tip portion 11, and the part within 6 mm from the tip portion 11 is more flexible. A cut face is designed in an area ranging from 6 mm away from the tip portion 11 to a tail end of the cut section 122, and the cutting edge 14 thereof has a constantly changed screw pitch and screw angle. The range of screw pitch is 0.2-3 mm, and the range of screw angle is 5-80°. The cut face is not available in an area of the uncut section 121 within 6 mm away from the tip portion 11, which maintains the overall good toughness of the root canal file, and makes the tip portion 11 less prone to needle breakage. During root canal preparation, the tip portion 11 and the area of the uncut section 121 within 6 mm away from the tip portion 11 can cling to the root canal wall, so that the root canal file moves along the anatomical shape of the root canal better, and the deviation of a central axis at the root tip site is smaller. Therefore, the effective removal rate of an infection source in the root canal is increased.

The cut section 122 is designed as a longitudinal cut face, the longitudinal cut face is a flat surface or curved surface, and the fifth line 1223 is a longitudinal straight line or a longitudinal curve accordingly. With the longitudinal cut face design, a structure in which the tip portion 11 has no cut face, the uncut section 121 has no cut face, the cut section 122 has the cut face, and the non-threaded portion 13 has no cut face is formed on the whole. The cut face only exists in the middle position of the root canal file. While ensuring that the working part 1 of the root canal file has no stress concentration point, the debris space is enlarged, and the problem of blockage caused by pushing the dentin debris to the root tip and the root canal is avoided; and furthermore, the downward suction force in the root canal is reduced, so that the risk of breakage of the root canal file or the separation of instruments is effectively reduced. In an embodiment, the longitudinal cut face is a flat surface, and the fifth line 1223 is a longitudinal straight line.

In some embodiments of the present invention, the cut face depth of the cut section 122 is one-fifth to one-third of the thread diameter. Still further, the cut face depth of the cut section 122 is one-third of the thread diameter. By adopting this arrangement mode, the debris space is enlarged by 20% or more, and the problem of blockage caused by pushing the dentin debris to the root tip and the root canal is avoided; and furthermore, the downward suction force in the root canal is reduced, so that the risk of breakage of the root canal file or the separation of instruments is effectively reduced.

In some embodiments of the present invention, threads of the threaded portion 12 are reverse threads. With the design of the reverse thread, the instruments are applicable to reciprocating motion mode. Reciprocating motion is a new movement mode of the root canal file developed according to the principle of balance force. That is, by rotating anticlockwise at a large angle, such as 150° or 170° in the cutting direction, the dentin is cut, and by rotating reversely, for example, clockwise at a small angle, such as 30° or 50°, the instrument is separated from the dentin and continues to move forward safely. The angle of counterclockwise rotation is less than an elastic limit of the instrument, and the reciprocating motion corresponding to the reverse threads can relieve the pressure applied to the root canal wall and release the torsional stress loaded on the instrument, such that the occurrence rate of root fracture and instrument separation is reduced. Compared with continuous rotary motion, root canal preparation by the reciprocating motion can significantly improve the cutting performance and anti-fatigue performance of the root canal file. The offset degree of the reciprocating motion of the prepared curved root canal is significantly less than that of the continuous rotary motion, which is better for the central positioning and cutting efficiency of the original root canal, and safer for patients. In addition, the design of the reverse thread can meet the working habits of dentists who need reverse operation at home and abroad. With the design of the reverse thread, it ensures that the root canal file does not move along a path of root canal preparation due to the inconsistent rotation path when entering the root canal of the patient's teeth, thereby avoiding the step caused by the operation of multiple root canal files.

In some embodiments of the present invention, the non-threaded portion 13 includes a transition portion 131 and a limiting portion 132. The tip portion 11, the uncut section 121, the cut section 122, the transition portion 131, the limiting portion 132 and the handle are connected in sequence. The transition portion 131 is in smooth connection with the cut section 122. The diameter of the limiting portion 132 is larger than that of the transition portion 131. A colored ring groove is formed in the middle of the handle, and a joint is reserved at a tail of the handle. In a specific operation process, the root canal file is used to expand the root canal. Colored rings of different colors are placed in the colored ring groove for distinction. The joint is connected to a root canal motor, and the root canal file is driven to rotate by the motor to expand the root canal. The position of a limit block is controlled according to the working length. The working part 1 enters the root of the tooth, is pulled shortly, and is withdrawn when encountering resistance. With continue rotation at a high speed, the debris is discharged upward continuously to ensure a smooth passage.

In some embodiments of the present invention, the working part 1 is made of Ni-Ti alloy, except for the limiting portion 132. The Ni-Ti alloy itself has a memory function and is good in ductility, thus having the ability to handle complex root canals. Safe and effective preparation can be performed for the narrowest end to the widest end, and the straight root canal to the most curved root canal.

## Claims

1. A root canal file, comprising:
a working part (1), which comprises a tip portion (11), a threaded portion (12) and a non-threaded portion (13), the tip portion (11) being a round blunt semi-guiding tip, the threaded portion (12) comprising an uncut section (121) and a cut section (122), and the tip portion (11), the uncut section (121), the cut section (122) and the non-threaded portion (13) being connected in sequence; and
a handle, to which the non-threaded portion (13) is connected;
wherein the cross section of the uncut section (121) is a figure that is symmetric about the origin, the cross-sectional profile of the uncut section comprises a first line (1211) and a second line (1212), and the first line (1211) and the second line (1212) are symmetric about the origin; the first line (1211) and the second line (1212) are connected to each other end to end to form a blade-shaped closed shape;
**characterized in that**:
the cut section (122) is designed as a longitudinal cut face, and the longitudinal cut face is a flat surface;
wherein the cross section of the cut section (122) is an asymmetrical figure, the cross-section profile of the cut section comprises a third line (1221), a fourth line (1222) and a fifth line (1223), the fifth line is a longitudinal straight line, and the third line (1221), the fourth line (1222) and the fifth line (1223) are connected to each other end to end to form a blade-shaped closed figure.

2. The root canal file according to claim 1, wherein the cross section of the cut section (122) is different from that of the uncut section (121), and the two cross sections are both blade-shaped and have at least 2 cutting edges.

3. The root canal file according to claim 1, wherein the length of the uncut section is less than or equal to 6 mm.

4. The root canal file according to claim 1, wherein the cut face depth of the cut section is one-fifth to one-third of the thread diameter.

5. The root canal file according to claim 1, wherein the taper of the working part gradually increases from the tip portion to the threaded portion, and the range of the taper is 1-30°;
the screw pitches of the cutting edges of the working part are different, and the range of the screw pitches is 0.2-3 mm; and the screw angles of the cutting edges of the working part are different, and the range of the screw angles is 5-80°.

6. The root canal file according to claim 1, wherein threads of the threaded portion are reverse threads.

7. The root canal file according to claim 1, wherein the non-threaded portion comprises a transition portion and a limiting portion, the tip portion, the uncut section, the cut section, the transition portion, the limiting portion and the handle are connected in sequence, the transition portion is in smooth connection with the cut section, and the diameter of the limiting portion is larger than that of the transition portion.

## Patentansprüche

1. Wurzelkanalfeile, bestehend aus:
einem Arbeitsteil (1), das einen Spitzenabschnitt (11), einen Gewindeabschnitt (12) und einen gewindelosen Abschnitt (13) umfasst, wobei der Spitzenabschnitt (11) eine runde, stumpfe, halbführende Spitze ist, der Gewindeabschnitt (12) einen ungeschnittenen Abschnitt (121) und einen Schnittabschnitt (122) umfasst und der Spitzenabschnitt (11), der ungeschnittene Abschnitt (121), der Schnittabschnitt (122) und der gewindelose Abschnitt (13) nacheinander verbunden sind; und
einem Griff, mit dem der gewindelose Abschnitt (13) verbunden ist;
wobei der Querschnitt des ungeschnittenen Abschnitts (121) eine Figur ist, die den Ursprung symmetrisch umgibt, das Querschnittsprofil des ungeschnittenen Abschnitts eine erste Linie (1211) und eine zweite Linie (1212) umfasst und die erste Linie (1211) und die zweite Linie (1212) den Ursprung symmetrisch umgeben; und wobei die erste Linie (1211) und die zweite Linie (1212) Ende an Ende miteinander verbunden sind, um eine klingenförmige, geschlossene Form zu bilden;
**dadurch gekennzeichnet, dass**:
der Schnittabschnitt (122) als Längsschnittfläche ausgebildet ist und die Längsschnittfläche eine ebene Fläche ist;
wobei der Querschnitt des Schnittabschnitts (122) eine asymmetrische Figur ist, das Querschnittsprofil des Schnittabschnitts eine dritte Linie (1221), eine vierte Linie (1222) und eine fünfte Linie (1223) umfasst, die fünfte Linie eine gerade Längslinie ist und die dritte Linie (1221), die vierte Linie (1222) und die fünfte Linie (1223) Ende an Ende miteinander verbunden sind, um eine klingenförmige geschlossene Figur zu bilden.

2. Wurzelkanalfeile nach Anspruch 1, wobei der Querschnitt des Schnittabschnitts (122) sich vom Querschnitt des ungeschnittenen Abschnitts (121) unterscheidet und die beiden Querschnitte jeweils klingenförmig sind und mindestens zwei Schneidkanten aufweisen.

3. Wurzelkanalfeile nach Anspruch 1, wobei die Länge des ungeschnittenen Abschnitts kleiner oder gleich 6 mm ist.

4. Wurzelkanalfeile nach Anspruch 1, wobei die Schnittflächentiefe des Schnittabschnitts ein Fünftel bis ein Drittel des Gewindedurchmessers beträgt.

5. Die Wurzelkanalfeile nach Anspruch 1, wobei die Verjüngung des Arbeitsteils vom Spitzenabschnitt zum Gewindeabschnitt allmählich zunimmt und der Bereich der Verjüngung 1-30° beträgt;
wobei die Gewindesteigungen der Schneidkanten des Arbeitsteils unterschiedlich sind und der Bereich der Gewindesteigungen 0,2-3 mm beträgt; und die Gewindewinkel der Schneidkanten des Arbeitsteils unterschiedlich sind und der Bereich der Gewindewinkel 5-80° beträgt.

6. Wurzelkanalfeile nach Anspruch 1, wobei die Gewinde des Gewindeabschnitts Rückwärtsgewinde sind.

7. Wurzelkanalfeile nach Anspruch 1, wobei der gewindelose Abschnitt einen Übergangsabschnitt und einen Begrenzungsabschnitt umfasst, wobei der Spitzenabschnitt, der ungeschnittene Abschnitt, der Schnittabschnitt, der Übergangsabschnitt, der Begrenzungsabschnitt und der Griff nacheinander verbunden sind, wobei der Übergangsabschnitt in reibungsloser Verbindung mit dem Schnittabschnitt steht und der Durchmesser des Begrenzungsabschnitts größer als der des Übergangsabschnitts ist.

## Revendications

1. Une lime de canal radiculaire, comprenant:
une pièce de travail (1), qui comprend une partie d'embout (11), une partie filetée (12) et une partie non filetée (13), la partie d'embout (11) étant une pointe semi-guide ronde émoussée, la partie filetée (12) comprenant une section non coupée (121) et une section coupée (122), et la partie d'embout (11), la section non coupée (121), la section coupée (122) et la partie non filetée (13) étant reliées en séquence; et
une poignée, à laquelle la partie non filetée (13) est reliée ;
dans lequel la section transversale de la section non coupée (121) est une figure symétrique par rapport à l'origine, le profil de la section non coupée comprend une première ligne (1211) et une deuxième ligne (1212), et la première ligne (1211) et la deuxième ligne (1212) sont symétriques par rapport à l'origine ; la première ligne (1211) et la deuxième ligne (1212) sont reliées l'une à l'autre bout à bout pour former une forme fermée en forme de lame ;
**caractérisée en ce que**:
la section de coupe (122) est conçue comme une face de coupe longitudinale, et la face de coupe longitudinale est une surface plane ;
dans laquelle la section transversale de la section coupée (122) est une figure asymétrique, le profil de section transversale de la section coupée comprend une troisième ligne (1221), une quatrième ligne (1222) et une cinquième ligne (1223), la cinquième ligne est une ligne droite longitudinale, et la troisième ligne (1221), la quatrième ligne (1222) et la cinquième ligne (1223) sont reliées l'une à l'autre bout à bout pour former une figure fermée en forme de lame.

2. Lime de canal radiculaire selon la revendication 1, dans laquelle la section transversale de la section coupée (122) est différente de celle de la section non coupée (121). et les deux sections transversales sont toutes deux en forme de lame et ont au moins 2 arêtes de coupe.

3. Lime de canal radiculaire selon la revendication 1, dans laquelle la longueur de la section non coupée est inférieure ou égale à 6 mm.

4. Lime de canal radiculaire selon la revendication 1, dans laquelle la profondeur de la face coupée de la section coupée est d'un cinquième à un tiers du diamètre du filetage.

5. Lime de canal radiculaire selon la revendication 1, dans laquelle le cône de la partie de travail augmente progressivement de la partie de pointe à la partie filetée, et la plage du cône est de 1 à 30° ;
les pas de vis des arêtes de coupe de la pièce de travail sont différents et la plage des pas de vis est de 0,2 à 3 mm ; et les angles de vis des arêtes de coupe de la pièce de travail sont différents, et la plage des angles de vis est de 5 à 80°.

6. Lime de canal radiculaire selon la revendication 1, dans laquelle les filetages de la partie filetée sont des filetages inversés.

7. Lime de canal radiculaire selon la revendication 1, dans laquelle la partie non filetée comprend une partie de transition et une partie de limitation, la partie de pointe, la section non coupée, la section coupée, la partie de transition, la partie de limitation et la poignée sont reliés en séquence, la partie de transition est en liaison lisse avec la section coupée, et le diamètre de la partie de limitation est supérieur à celui de la partie de transition.
